# EUROPEAN PATENT SPECIFICATION

(11) **EP 3 025 583 B1**
(45) Date of publication and mention of the grant of the patent: **27.09.2017**
(21) Application number: 15196294.1
(22) Date of filing: 25.11.2015
(51) Int. Cl.: A01N 25/00, A01P 7/00, A01P 9/00

(54) **BAIT COMPOSITIONS AND METHODS FOR CONTROLLING A PEST BY PHYSICAL EFFECTS**
KÖDERZUSAMMENSETZUNGEN UND VERFAHREN ZUR SCHÄDLINGSBEKÄMPFUNG DURCH PHYSIKALISCHE WIRKUNG
COMPOSITIONS D'APPÂT ET PROCÉDÉS DE LUTTE CONTRE LES NUISIBLES PAR EFFETS PHYSIQUES

(30) Priority: 28.11.2014 EP 14195431
(43) Date of publication of application: 01.06.2016
(73) Proprietor: BioGenius GmbH, 50429 Bergisch Gladbach (DE)
(72) Inventor: BERENGARDT, Ina, 51467 Bergisch Gladbach (DE); BUBLITZ, Mike, 51399 Burscheid (DE); RADECKI, Claudia, 51429 Bergisch Gladbach (DE); RODRIGUEZ Y FISCHER, Nicolas, 50676 Köln (DE)
(74) Representative: f & e patent

(56) References cited:
- WO-A1-2008/020642
- BE-A5- 1 000 534
- CN-A- 1 868 307
- JP-A- H02 304 007
- JP-A- 2008 063 346
- US-A- 4 983 390
- DATABASE WPI Week 199209 17 January 1992 (1992-01-17) Thomson Scientific, London, GB; AN 1992-069400 XP002737310, & JP H04 13601 A (MATSUSHITA ELEC IND CO LTD) 17 January 1992 (1992-01-17)

## Description

The present invention relates to bait compositions for controlling a pest by physical effects, to methods for controlling a pest by physical effects employing said bait compositions and to the use of a swellable agent for controlling a pest ingesting a composition, which comprises said swellable agent by physical effects.

Conventional pesticidal bait compositions usually rely on the toxic effects of a stomach poison comprising a chemical or biological toxicant. For instance, insecticidal bait compositions often employ one or more chemical toxicants, examples of which include organochlorine, organophosphate, neonicotinoid, carbamate and pyrethroid pesticides. Neonicotinoids are a class of highly potent chemical insecticides, which can be employed as stomach or contact poison.

However, in recent years neonicotinoids have come under increasing scrutiny over environmental impacts, including honey-bee colony collapse disorder, leading to restrictions and bans on their use in several countries. In addition, exposure to conventional chemical pesticides can cause a variety of adverse health effects in humans, ranging from simple skin irritations to affecting the nervous system, affecting the hormone system and causing cancer.

Although various attempts have been made to develop target-specific pesticides with less off-target effects, including the use of naturally occurring substances (biopesticides), to reduce detrimental effects on the health of non-target species and the environment, there is still a need for safer compositions.

It is therefore an object of the present invention to provide an environmentally friendly bait composition for controlling a pest as well as methods for pest control using such a composition and for the preparation of such compositions. Furthermore the composition should be easy to handle and be non-toxic to the user and further non-target organisms, in particular to mammals.

This object is met by the bait composition and methods of the present invention. The bait composition of the present invention comprises at least one swellable agent and at least one substance stimulating and/or enhancing feeding and/or ingestion of the composition by the pest, but is substantially free of any pesticidal agent exerting a controlling effect on the pest by chemical or biological action after ingestion of the composition by the pest. Various pesticidal compositions are known that, besides conventional chemical and/or biological toxicants (pesticides), comprise, among others, a so-called superabsorbent polymer (SAP), commonly as carrier material and/or formulation aid. SAPs are cross-linked polymers that have the ability to absorb several to some hundred times their own weight of deionized water and thus are swellable agents in the sense of the present invention. For instance, WO 89/12450 A1 discloses the use of SAPs in pesticidal delivery agents for the control of terrestrial insects to enhance the distribution and activity of the active agent. Further pesticidal compositions comprising a superabsorbent polymer are described in WO 2008/020642 A1, JP 2008/063346 A, BE 1000534 A5, JP H02 304007 A and JP H04 13601 A. A fish bait comprising a superabsorbent polymer has been described in CN 1868307 A. Even though attempts have been made to provide a mere physical controlling effect on a target organism exerted exclusively by the swellable agent after ingestion, i.e. oral uptake by the target organism, the obtained results were not fully satisfying. Hence, commercially available formulations still rely on the action of chemical and/or biological pesticides.

It has surprisingly been found that ingestion of a bait composition according to the present invention which comprises at least a swellable agent in the form of particles having a median particle size Dv50 of 100 µm or less and at least a substance stimulating and/or enhancing feeding and/or ingestion of the composition, but is substantially free of any pesticidal agent exerting a controlling effect on the target organism by chemical or biological action provides sufficient means for pest control, leading to death of the target organism by substantially mere physical effects.

As the composition of the present invention is substantially free of any pesticidal agent exerting a controlling effect on the pest by chemical or biological action after ingestion of the composition by the pest, it is non-toxic and safe to human health and the environment. Remnants of the bait composition do not require special waste disposal and can be deposited in the general household waste. The bait composition of the present invention is therefore also especially suitable for in-house/domestic use. Advantageously the bait compositions and methods of the present invention are also suitable to control species, which have developed resistance to common chemical or biological pesticides.

In terms of the present invention the term "bait composition" refers to a composition that attracts a target organism and is ingested by the target organism through its oral opening, i.e. consumed by oral uptake. Upon ingestion the bait composition preferably may get into the gastro-intestinal tract of said organism to exert a controlling effect on said organism by physical, preferably mechanical effects.

In terms of the present invention the term "controlling effect by biological or chemical action" refers to the toxic effects exerted by common chemical and biological pesticidal agents including e.g. organochlorine, organophosphate, neonicotinoid, carbamate and pyrethroid pesticides after oral uptake. In particular the term "biological or chemical action" refers to effects occurring in the target organism due to a (bio)chemical reaction with or induced by said pesticide or a metabolite thereof. Common pesticides act e.g. on the central nervous system or the reproductive system of an animal target organism. However, said term does not include chemical or biological substances in general. Rather chemical and/or biological substances, which are palatable to the target organism without exerting a controlling effect on said target organism upon ingestion, may be present in the composition. Substances, which may be present in the composition, also include preservatives, which may act as fungicide, bactericide and/or antiseptic. The term "pesticidal agents" according to the present invention preferably refers to an agent selected from the list consisting of: 1,1-dichloro-2,2-bis-(4-ethyl-phenyl)ethane, 1,2-dibromoethane, 1,2-dichloroethane, 1,2-dichloropropane, 1,3,5-tri-(2-hydroxyethyl)-hexa-hydro-s-triazyne, 1,3-dichloropropene, 1,3-diphenyl urea, 1,4-dimethylnaphthalene, 2,3,6-trichlorobenzoic acid, 2,4,5-trichlorophenoxyacetic acid, 2,4-dichlorophenoxyacetic acid, 4-(2,4-dichlorophenoxy)butyric acid, 2-(dithiocyanomethylthio)-benzothiazol, 2-aminobutane (aka sec-butylamine), 8-hydroxyquinoline, abamectin (aka avermectin), acephate, acequinocyl, acetamiprid, acetochlor, acibenzolar-S-methyl (benzothiadiazole), acifluorfen, aclonifen, acridinic bases, acrinathrin, AD-67 (4-(dichloroacetyl)-1-oxa-4-azaspiro[4.5]decane, alachlor, alanycarb, aldicarb, aldimorph, aldrin, alkyl mercury compounds, alkyloxyl and aryl mercury compounds, allethrin, alloxydim, allyl alcohol, alpha-cypermethrin (aka alphamethrin), aluminium phosphide, ametoctradin, ametryn, amidosulfuron, aminopyralid, amisulbrom, amitraz, amitrole (aminotriazole), ammonium bituminosulfonate, ammonium sulphamate, ammonium thiocyanate, ampropylfos, ancymidol, anilazine, anilofos, anthracene oil, anthraquinone, aramite, asomate, asulam, atrazine, aviglycine HCl, azaconazole, azadirachtin, azafenidin, azamethiphos, azimsulfuron, azinphos ethyl, azinphos-methyl, aziprotryne, azocyclotin, azoxystrobin, barban, barium fluosilicate, barium nitrate, barium polysulphide, beflubutamid, benalaxyl, benalaxyl-m, benazolin, bendiocarb, benfluralin, benfuracarb, benfuresate, benodanil, benomyl, benoxacor, bensulfuron, bensulide, bensultap, bentaluron, bentazone, benthiavalicarb, benzalkonium chloride, benzobicyclon, benzovindiflupyr, benzoximate, benzoylprop, benzthiazuron, beta-cyfluthrin, beta-cypermethrin, bifenazate, bifenox, bifenthrin, binapacryl, bioallethrin, bioresmethrin, biphenyl, bis(tributyltin) oxide, bispyribac, bitertanol, bitumen, bixafen, blasticidin-S, Bordeaux mixture, boric acid, boscalid (formerly nicobifen), brandol (hydroxynonyl-2,6-dinitrobenzene), brodifacoum, bromacil, bromadiolone, bromethalin, bromocyclen, bromofenoxim, bromophos, bromophos-ethyl, bromopropylate, bromoxynil, bromuconazole, bronopol, bupirimate, buprofezin, butachlor, butamifos, butocarboxim, butoxycarboxim, butralin, butylate, cadusafos (aka ebufos), cafenstrole, calcium carbide, calcium phosphide, camphechlor, captafol, captan, carbaryl, carbendazim, carbetamide, carbofuran, carbon disulphide, carbophenothion, carbosulfan, carboxin, carfentrazone-ethyl, carpropamide, cartap, carvone, cetrimide, chinin hydrochloride, chinomethionat (aka quinomethionate), chlobenthiazone, chlomethoxyfen, chloral-bis-acylal, chloral-semi-acetal, chloralose, chloramben, chlorantraniliprole, chlorates: including magnesium, sodium, potassium chlorates, chlorbenside, chlorbromuron, chlorbufam, chlordane, chlordecone, chloretazate (ISO: karetazan), chlorethoxyfos, chlorfenapyr, chlorfenprop, chlorfenson (aka chlorfenizon), chlorfenvinphos, chlorfluazuron, chlorflurenol (chlorflurecol), chlorhydrate of poly(iminino imido biguanidine), chloridazon (aka pyrazone), chlorimuron, chlorine dioxide, chlormephos, chlormequat, chlorobenzilate, chloroneb, chlorophacinone, chloropicrin, chloropropylate, chlorothalonil, chlorotoluron, chloroxuron, chlorphonium chloride, chlorpropham, chlorpyrifos, chlorpyrifos-methyl, chlorsulfuron, chlorthal-dimethyl, chlorthiamid, chlorthiophos, chlozolinate, chromafenozide, cinidon ethyl, cinosulfuron, clethodim, clodinafop, clofencet, clofentezine, clomazone, clomeprop, clopyralid, cloquintocet mexyl, clothianidin, copper complex: 8-hydroxyquinoline with salicylic acid, copper hydroxide, copper oxide, copper oxychloride, coumachlor, coumafuryl, coumaphos, coumatetralyl, cresylic acid, crimidine, cryolite, cufraneb, cumylphenol, cyanamide (H & Ca cyanamide), cyanazine, cyanides: including calcium, hydrogen, sodium cyanides, cyantraniliprole, cyazofamid, cyclanilide, cycloate, cycloxydim, cycluron, cyenopyrafen, cyflufenamid, cyflumetofen, cyfluthrin, cyhalofop-butyl, cyhalothrin, cyhexatin, cymoxanil, cypermethrin, cyproconazole, cyprodinil, cyprofuram, cyromazine, DADZ (zinc-dimethylditiocarbamate), dalapon, daminozide, dazomet, DDT, delta-endotoxin of Bacillus thuringiensis, deltamethrin, demeton-S-methyl, demeton-S-methyl sulphone, denathonium benzoate, desmedipham, desmetryn, di-1-p-menthene B470, di-allate, diafenthiuron, dialifos, diazinon, dicamba, dichlobenil, dichlofenthion, dichlofluanid, dichlone, dichlorophen, dichlorprop, dichlorprop-p, dichlorvos, diclobutrazol, diclofop, dicloran, dicofol, dicrotophos, dicyclopentadiene, dieldrin, dienochlor, diethatyl, diethatyl-ethyl, diethofencarb, difenacoum, difenoconazole, difenoxuron, difenzoquat, difethialone, diflubenzuron, diflufenican, dikegulac, dimefox, dimefuron, dimepiperate, dimethachlor, dimethenamid, dimethenamid-p, dimethipin, dimethirimol, dimethoate, dimethomorph, dimethylvinphos, dimexano, dimoxystrobin, diniconazole-m, dinitramine, dinobuton, dinocap, dinoseb: including acetate and salts, dinotefuran, dinoterb, dioxacarb, dioxathion, diphacinone, diphenamid (aka difenamide), diphenylamine, diquat (dibromide), disodium octaborate tetrahydrate, disodium phosphonate, disulfoton, ditalimfos, dithianon, dithiopyr, diuron, DNOC (2-methyl-4,6-dinitrophenol), dodemorph, dodine, drazoxolon, edifenphos, emamectin, endosulfan, endothal, endrin, EPN (O-Ethyl-O-(4-nitrophenyl)phenylthiophosphonate), epoxiconazole, EPTC (S-dipropylthiocarbamate), esfenvalerate, esprocarb, etacelasil, etaconazole, ethaboxam, ethalfluralin, ethametsulfuron, ethanethiol, ethephon, ethidimuron (aka sulfodiazol), ethiofencarb, ethion (aka diethion), ethiprole, ethirimol, ethoate-methyl, ethofumesate, ethoprophos, ethoxyquin, ethoxysulfuron, ethychlozate, ethyl 2,4-decadienoate, ethylene, ethylene oxide, ethylhexanoate, etofenprox, etoxazole, etridiazole, etrimfos, famoxadone, fenamidone, fenaminosulf, fenamiphos (aka phenamiphos), fenarimol, fenazaflor, fenazaquin, fenbuconazole, fenbutatin oxide, fenchlorazole-ethyl, fenchlorphos, fenclorim, fenfuram, fenhexamid, fenitrothion, fenobucarb, fenoprop, fenothiocarb, fenoxaprop, fenoxaprop-p, fenoxycarb, fenpiclonil, fenpropathrin, fenpropidin, fenpropimorph, fenpyrazamine, fenpyroximate, fenridazon, fenson (aka fenizon), fenthion, fenthiosulf, fentin acetate, fentin hydroxide, fentrazamide, fenuron, fenvalerate, ferbam, ferric phosphate, fipronil, flamprop, flamprop-M, flazasulfuron, flocoumafen, flonicamid (IKI-220), florasulam, fluacrypyrim, fluazifop, fluazifop-P, fluazinam, fluazolate (formerly isopropozole), flubendiamide, flubenzimine, flucarbazone-sodium, flucycloxuron, flucythrinate, fludioxonil, flufenacet (formerly fluthiamide), flufenoxuron, flufenzin (ISO: diflovidazin), flumequine, flumetralin, flumetsulam, flumiclorac-pentyl, flumioxazin, fluometuron, fluopicolide, fluopyram, fluoroacetamide, fluorodifen, fluoroglycofen, fluoxastrobin, flupoxam, flupyradifurone, flupyrsulfuron-methyl (DPX KE 459), fluquinconazole, flurazole, flurenol (flurecol), fluridone, flurochloridone, fluroxypyr, flurprimidol, flurtamone, flusilazole, flusulfamide, flutianil, flutolanil, flutriafol, fluxapyroxad, folpet, fomesafen, fonofos, foramsulfuron, forchlorfenuron, formetanate, formothion, fosamine, fosetyl, fosthiazate, fosthietan, fuberidazole, furalaxyl, furathiocarb, furconazole, furfural, furmecyclox, gamma-cyhalothrin, gentian violet, glufosinate, glutaraldehyde (aka glutardialdehyde), glyphosate: including trimesium aka sulfosate, guazatine, halauxiphen-methyl, halfenprox (aka brofenprox), halosulfuron methyl, haloxyfop, haloxyfop-P (haloxyfop-R), HBTA (high boiling tar acid), HCH (hexachlorocyclohexane), heptachlor, heptamaloxyloglucan, heptenophos, hexachlorobenzene, hexachlorophene, hexaconazole, hexaflumuron, hexamethylene tetramine (urotropin), hexazinone, hexythiazox, hydramethylnon, hydroxy-(4-chloro-2-methylphenoxy)-acetic acid, hydroxyphenyl-salicylamide, hymexazol, idanofan, imazalil (aka enilconazole), imazamethabenz, imazamox, imazapic, imazapyr, imazaquin, imazethabenz, imazethapyr, imazosulfuron, imibenconazole, imicyafos, imidacloprid, iminoctadine, indanofan, indaziflam, indolylacetic acid (aka auxins), indolylbutyric acid, indoxacarb, iodofenphos, iodosulfuron, ioxynil, ipconazole, iprobenfos, iprodione, iprovalicarb, isazofos, isocarbamid, isocarbophos (ISO: isopropyl o-(methoxyaminothiophosphoryl)salicylate), isofenphos, isofenphos-methyl, isofetamid, isolane, isoprocarb, isopropalin, isoprothiolane, isoproturon, isopyrazam, isotianil, isouron, isoval, isoxaben, isoxaflutole, isoxathion, karbutilate, kasugamycin, kelevan, kinoprene, kresoxim-methyl, lactofen, lambda-cyhalothrin, lenacil, lepimectin, lindane, linuron, lufenuron, magnesium phosphide, malathion, maleic hydrazide, maleic hydrazide and its salts, mancopper, mancozeb, mandestrobin, mandipropamid, maneb, MCPA, MCPB, mecarbam, mecoprop, mecoprop-P, mefenacet, mefenpyr, mefluidide, mepanipyrim, mephosfolan, mepiquat, mepronil, meptyldinocap, mercuric oxide, mercurous chloride (calomel), merphos (aka tributylphosphorotrithioite), mesosulfuron, mesotrione, metaflumizone, metalaxyl, metalaxyl-M, metaldehyde, metam: including -potassium and -sodium, metamifop, metamitron, metazachlor, metconazole, methabenzthiazuron, methacrifos, methamidophos, methazole, methfuroxam, methidathion, methiocarb (aka mercaptodimethur), methomyl, methoprene, methoprotryne, methoxychlor, methoxyfenozide, methyl bromide, methyl isothiocyanate, methyl p-hydroxybenzoate, methyl-trans-6-nonenoate, methylenebisthiocyanate, methylnaphthylacetamide, methylnaphthylacetic acid, metiram, metobromuron, metolachlor, metolcarb, metominostrobin, metosulam, metoxuron, metrafenone, metribuzin, metsulfovax, metsulfuron-methyl, mevinphos, milbemectin, mirex, molinate, monalide, monocarbamide-dihydrogensulphate, monocrotophos, monolinuron, monuron, MSMA (methyl arsonic acid), myclobutanil, N,N-diallyl-2,2-dichloroacetamide, N-acetyl thiazolidin-4-carboxylic acid, N-octyl bicycloheptene dicarboximide, N-phenylphthalamic acid, nabam, naled, naphtalene, naphtylacetic acid hydrazide, napropamide, naptalam, neburon, nicosulfuron, nicotine, nitenpyram, nitralin, nitrofen, nitrothal, nonylphenol ether polyoxyethyleneglycol, nonylphenol ethoxylate, norflurazon, noruron, novaluron, nuarimol, octhilinone, ofurace, omethoate, orbencarb, orthosulfamuron, orysastrobin, oryzalin, inorganic mercury compounds, oxadiargyl, oxadiazon, oxadixyl, oxamyl, oxasulfuron, oxine-copper, oxpoconazole, oxycarboxin, oxydemeton-methyl, oxyfluorfen, oxytetracycline, p-chloronitrobenzene, p-cresyl acetate, p-dichlorobenzene, paclobutrazol, paraquat, parathion, parathion-methyl, pebulate, pefurazoate, penconazole, pencycuron, pendimethalin, penflufen, penoxsulam, pentachlorophenol, pentanochlor, penthiopyrad, pentoxazone, perchlordecone (mirex), perfluidone, permethrin, pethoxamid, phenmedipham, phenols, phenothrin, phenthoate, pherodim, phorate, phosalone, phosametine (LS830556), phosmet, phosphamidon, phosphane, phoxim, phthalide, picloram, picolinafen, picoxystrobin, pinoxaden, piperalin, piperonyl butoxide, piributicarb, pirimicarb, pirimiphos-ethyl, pirimiphos-methyl, polyoxin, potassium permanganate, potassium phosphonates (formerly potassium phosphite), potassium thiocyanate, pretilachlor, primisulfuron, probenazole, prochloraz, procymidone, profenofos, profoxydim, prohexadione, prohydrojasmon, promecarb, prometryn, pronumone, propachlor, propamocarb, propanil, propaphos, propaquizafop, propargite, propazine, propetamphos, propham, propiconazole, propineb, propionic acid, propisochlor (ISO: 2-chloro-6'-ethyl-N-isopropoxymethylaceto-o-toluidide), propoxur, propoxycarbazone, propyl-3-t-butylphenoxyacetate, propyrisulfuron, propyzamide, proquinazid, prosulfocarb, prosulfuron, prothiocarb, prothioconazole, prothiofos, prothoate, putrescine (1,4-diaminobutane), pymetrozine, pyraclofos, pyraclostrobin, pyraflufen-ethyl, pyranocoumarin, pyrasulfotole, pyrazophos, pyrazoxyfen, pyrethrins, pyridaben, pyridafol, pyridalyl, pyridaphenthion, pyridate, pyrifenox, pyrifluquinazon, pyriftalid, pyrimethanil, pyrimidifen, pyrimisulfan, pyriofenone, pyriproxyfen, pyroquilon, pyroxasulfone, pyroxsulam, quinalphos, quinclorac, quinmerac, quinoclamine, quinoxyfen, quintozene, quizalofop, quizalofop-P, quizalofop-P-ethyl, quizalofop-P-tefuryl, rescalure, resmethrin, rimsulfuron (aka renriduron), rotenone, S-metolachlor, saflufenacil, scilliroside, secbumeton, seconal (aka 5-allyl-5-(1'-methylbutyl) barbituric acid), sedaxane, serricornin, sethoxydim, siduron, silafluofen, silthiofam, silver iodide, simazine, simeconazole, sintofen (aka cintofen), sodium 5-nitroguaiacolate, sodium arsenite, sodium diacetoneketogulonate, sodium dichlorophenate, sodium dimethylarsinate, sodium o-benzyl-p-chlorphenoxide, sodium o-nitrophenolate, sodium p-nitrophenolate, sodium p-t-amylphenate, sodium p-t-amylphenoxide, sodium silver thiosulphate, sodium tetraborate, sodium tetrathiocarbamate, sodium tetrathiocarbonate, sodium thiocyanate, sodium-p-toluene-sulfonchloramid, spinetoram, spinosad, spirodiclofen, spiromesifen, spirotetramat, spiroxamine, streptomycin, strychnine, sulcotrione, sulfaquinoxaline, sulfentrazone, sulfosulfuron, sulfotep, sulfoxaflor, sulfuryl fluoride, sulprofos, sumithrin, tau-fluvalinate, TCA (2,2,2-trichloroacetate), TCMTB (2-(thiocyanomethylthio) benzothiazole), tebuconazole, tebufenozide, tebufenpyrad, tebutam (aka butam), tebuthiuron, tecnazene, teflubenzuron, tefluthrin, tembotrione, temephos, tepraloxydim, terbacil, terbufos, terbumeton, terbuthylazine, terbutryn, terpenoid blend QRD-460, tetrachlorvinphos, tetraconazole, tetradifon, tetraethyl pyrophosphate, tetramethrin, tetrasul, thallium sulphate, thiabendazole, thiacloprid, thiamethoxam, thiazafluron, thiazopyr, thidiazuron, thiencarbazone, thifensulfuron-methyl, thiobencarb, thiocyclam, thiodicarb, thiofanox, thiometon, thionazin, thiophanate (ethyl), thiophanate-methyl, thiosultap sodium, thiourea, thiram, tiadinil, tiocarbazil, tolclofos-methyl, tolfenpyrad,
tolylfluanid, tolylphtalam (ISO: N-m-tolylphthalamic acid), topramezone, tralkoxydim, tralomethrin, trans-6-nonen-1-ol, tri-allate, triadimefon, triadimenol, triapenthenol, triasulfuron, triazamate, triazbutyl, triazophos, triazoxide, tribenuron (aka metometuron), tribufos (s,s,s-tributyl-phosphorotrithioate), trichlorfon, trichloronat, triclopyr, tricyclazole, tridemorph, tridiphane, trietazine, trifenmorph, trifloxystrobin, triflumizole, triflumuron, trifluralin, triflusulfuron, triforine, trimedlure, trimethylamine hydrochloride, trinexapac (aka cimetacarb ethyl), trioxymethylen, triticonazole, tritosulfuron, uniconazole, validamycin, valifenalate (formerly valiphenal), vamidothion, vernolate, vinclozolin, warfarin (aka coumaphene), XMC (3,5-dimethylphenol 1-(N-methylcarbamate), zeta-cypermethrin, zinc phosphide, zineb, ziram and zoxamide, without being limited to these. The composition of the present invention preferably is substantially and even more completely free from any of these substances.

Without wishing to be bound by theory, it is believed that in the instant invention the volume increase of the swellable agent upon contact with water inside the body cavity of the target organism, e.g. in the gastro-intestinal tract, damages the structural integrity of at least a part of the organism's body, for instance by rupture, finally leading to the death of the organism. For example, in the case of insect targets it could be shown that the bait composition of the present invention damages the gastro-intestinal tract and also the exoskeleton structure. In this respect it is particularly surprising that the rather small particle size of the swellable agent as compared to agents such as Aqua Keep® J-500 or Aridall® 1092 employed in the prior art, e.g. in U. S. Patent 4,983,390, seems to be an important factor for the good pest control provided by the compositions and methods of the present invention.

In terms of the present invention the terms "physical effect" or "controlling effect by physical means" refer to any controlling effect exerted inside the body of a target organism which is not primarily based on the (biochemical) action of a chemical or biological toxicant but on a substantially physical action of the swellable agent inside the body of the target organism after ingestion. Preferably such a physical action may be a mechanical action and said physical effects may include, but are not limited to, for instance, the increase in volume after contact with water, leading to rupture of parts of the organism's body, but also a desiccating action of the swellable agent inside the organism's body in the absence of water.

In terms of the present invention the term "target organism" or "target pest" refers to the pest species targeted for control by the bait composition of the present invention.

Preferably, the target pest is selected from invertebrates, more preferably from the group of hygiene pests and even more preferably from the group of hygiene pests consisting of insects, snails and slugs.

The term "hygiene pests" as used herein refers to species that through direct or indirect contact with human beings can transmit pathogens to or cause adverse health effects in human beings. Examples of hygiene pests include insects such as flies and mosquitoes which through direct contact, for example by biting or stinging or the like, transmit pathogens and/or cause pain to and/or allergic reactions in human beings; and also pests, including for example food pests, which by indirect contact, for example by ways of food contamination and/or through excrement may transmit pathogens to and/or cause allergies in human beings. In particular, the term "hygiene pests" includes insects such as for example ants, gadflies, moths, flies, fleas, lice, mites, cockroaches, millipedes, bugs, ticks, and related species, among which cockroaches are a particularly preferred target pest in terms of the present invention.

In terms of the present invention the term "substantially free of any pesticidal agent" refers to a composition not comprising such agents in an amount sufficient to observe a lethal effect associated to these agents on the target pest 14 days after voluntary ingestion of the composition by the pest. Preferably the composition of the present invention comprises less than 0.1 wt.-% of any pesticidal agent exerting a controlling effect on the pest by chemical or biological action after ingestion, based on total weight of the composition, more preferably less than 0.05 wt.-%, even more preferably less than 0.01 wt.-%, and still even more preferably of from less than 0.001 wt.-%. Most preferably the composition is completely free of any pesticidal agent exerting a controlling effect on the pest by chemical or biological action after ingestion.

Unless indicated otherwise, the term "total weight of the composition" as used herein refers to the total weight of the composition at a (theoretical) water content of 0 wt.-%.

In terms of the present invention the term "controlling effect" refers to an adverse effect to a pest individual or population including, for instance, adverse deviations from natural development, growth inhibition, regulation, killing and the like. Preferably, within a period of 14 days after the ingestion of the bait composition of the present invention at least 50% of the individuals of a group of target organisms having ingested said composition are dead, more preferably at least 75%, even more preferably at least 80%, still even more preferably at least 85%, particularly preferably at least 90% and most preferably at least 95% or even 100%.

Herein, the amount of ingested bait composition usually is in the range of from 0.001 to 100 wt.-% of the body weight of the pest and often exceeds 1 wt.-%, 5wt.-% or even 10 wt.-% of the body weight of the pest.

In terms of the present invention the term "swellable agent" refers to a substance capable of swelling upon contact with water. As used herein, the term "swellable agent" specifically refers to an agent capable of absorbing at least five times its own dry weight (i.e. at a theoretical moisture content of 0 wt.%) of deionized water, preferably at least 10 times, more preferably at least 50 times and even more preferably at least 100 times. Several SAPs are capable of absorbing up to thousand times their own dry weight of deionized water. Upon absorbing water or a water containing liquid, the swellable agent preferably expands in size. In the present invention the use of swellable agents is preferred which are capable of increasing their initial (dry) volume, i.e. their volume at a theoretical residual moisture content of 0 wt.-%, at least 10 times, preferably at least 20 times, more preferably at least 30 times, still even more preferably at least 40 times and most preferably at least 50 times by the uptake of deionized water.

The bait composition of the present invention preferably comprises less water than the maximum amount which can be absorbed by the swellable agent(s) being present in the composition, i.e. preferably said swellable agent(s) are not completely swollen before being ingested by the target pest. Thus, the water content of a bait composition of the present invention also depends on the particular swellable agent(s) used and preferably may range from 0 to 99 wt.-%, based on the total weight of the composition including said water, preferably from 0.00001 to 90 wt.-%, more preferably from 0.00001 to 75 wt.-%.

In a ready-to-use bait composition of the present invention, i.e. a form of the composition ready to be laid out for consumption by the pest, the water content of the composition preferably may be in the range of from 0.00001 to 50 wt.-%, based on the total weight of the composition including said water. More preferably, the water content of the composition may be in the range of 0.00005 to 20 wt.-%, based on the total weight of the composition including said water. Most preferred, the water content of the composition may be in the range of 0.0001 to 5 wt.-%, based on the total weight of the composition including said water. Herein, said amount of water does not necessarily have to be absorbed by the swellable agent. For instance, by using suitable coating materials, a premature uptake of water by the swellable agent from other components of the composition and/or the atmosphere may be avoided. Suitable coating materials include, for instance, water-soluble and/or biodegradable polymers such as polylactic acids, polyglycolides, polycaprolactones, polyvinyl alcohols, polysaccharides, including starch, celluloses, chitosans, polyhydroxyalkanoates, polyesters, derivatives and copolymers as well as mixtures thereof, without being limited to these.

Moreover, the bait compositions of the present invention may be prepared using water-based solutions and/or suspensions. The ready-to-use bait compositions of the present invention may then be prepared from these water-based solutions or suspensions by conventional drying steps well known to those skilled in the art, including, but not being limited to, evaporation at elevated temperatures and/or under reduced pressure, oven drying etc., without being limited to these. Preferred bait compositions of the present invention may be in solid particulate form. Such preferred composition may be prepared by mixing at least one swellable agent having a median particle size Dv50 of 100 µm or less, at least one substance stimulating and/or enhancing feeding and/or ingestion of the composition and water or an aqueous solution or suspension, respectively, thereby allowing the swellable agent to swell, e.g. to absorb at least 10 wt.-% of its own weight of water, before drying it as described above and comminuting the dried material, if desired, e.g. by pestling, milling, crushing or the like. Herein, preferably at least one volume of water or aqueous solution or suspension may be used per volume of swellable agent. As the swollen material will be dried afterwards to remove the water, it is of course also possible to employ much larger amounts of water or an aqueous solution or suspension, e.g. about 100 volumes per volume of swellable agent.

Swellable agents in the sense of the present invention include hydrophilic swellable agents, preferably polymeric hydrophilic swellable agents.

In terms of the present invention a hydrophilic swellable agent has the capability to absorb and interact with water, water-containing liquids and/or other polar substances without being dissolved by them and increases its volume upon absorption. Preferably said hydrophilic swellable agent also has the ability to retain the absorbed water under pressure.

Examples of hydrophilic swellable agents in the sense of the present invention include polyacrylamide copolymers, ethylene maleic anhydride copolymers, cross-linked carboxymethylcelluloses, polyvinyl alcohol copolymers, cross-linked polyethylene oxides, starch grafted copolymers of polyacrylonitrile, and polysaccharides selected, for instance, from the group comprising xanthan gum, gellan gum, carrageenan, and alginate, without being limited to these. Preferred are homo- and copolymers of ethylenically unsaturated monomers, such as α, β-unsaturated carboxylic acids, e.g. acrylic acid, their sodium, potassium, ammonium salts or mixtures thereof, with one or more cross-linkers, i.e. di- or multifunctional monomer(s), such as for example *N*,*N*'-methylenebisacrylamide, trimethylolpropane triacrylate, ethylene glycol di(methacrylate) or triallylamine. These di- or multifunctional monomers lead to a cross-linking in the polymer chains, rendering the polymer water-insoluble, yet water-absorbing.

More preferably the at least one swellable agent used in the bait composition of the present invention may be a polymeric hydrophilic swellable agent which comprises at least one cross-linked acrylic polymer. Examples include optionally partially or fully neutralized homo- and copolymers, including graft copolymers, of acrylic acid, salts, esters, amides and mixtures thereof. Most preferably the at least one swellable agent used in the bait composition of the present invention may be a polymeric hydrophilic swellable agent which comprises at least one cross-linked poly(acrylic acid) and/or a salt thereof, as many cross-linked acrylic polymers and in particular optionally fully or partially neutralized, cross-linked poly(acrylic acids) are excellent SAPs.

A particular preferred swellable agent is for example a SAP which is a cross-linked poly(acrylic acid), partially neutralized with sodium hydroxide, in the form of particles having a minimum water content of 3 wt.- %, based on the weight of the total composition including said water, and a median particle size Dv50 in the range of from of >0 to 63 µm, preferably of from 1 to 63 µm, more preferably of from 5 to 63 µm and still even more preferably of from 8 to 63 µm. Herein, preferably at most 2% of the SAP particles exceed a volumetric particle size of 63 µm.

The bait composition of the present invention may also comprise more than one swellable agent, i.e. it may comprise a mixture of two or more different swellable agents. These swellable agents may differ not only with respect to their chemical composition, but also with respect to their water content and/or water uptake behavior. Preferably, the swellable agent(s) is (are) present in the bait composition in a (combined) amount ranging from 0.5 - 99 wt.-%, more preferably from 1 to 90 wt.-%, even more preferably from 5 - 75 wt.-%, still even more preferably from 7.5 - 50 wt.-%, particularly preferably from 10 - 40 wt.-%, and most preferably from 15 to 25 wt.-%, based on the total weight of the composition.

Preferably, the swellable agent(s) may be present in the composition in the form of particles. Herein the term "particles" refers to a multitude of any discrete solid form including regularly and irregularly shaped grains, pellets, shells, fragments, beads, granules, spheres, and powders, without being limited to these. Said particles have a median particle size Dv50 of 100 µm or less, i.e. in the range of from > 0 to ≤100 µm, preferably of from 0.1 to 90 µm, more preferably of from 1 to 80 µm, even more preferably of from 5 to 70 µm and most preferably of from 8 to 63 µm. Herein, particle size distribution may preferably be monomodal.

The volumetric median particle size Dv50 can be measured using known measuring methods and instruments. In terms of the present invention said particle size is determined using the CIPAC MT 187 method for particle size analysis by laser diffraction using a particle size analyzer such as Mastersizer 2000 from Malvern Instruments Ltd, Malvern, UK. Therein the dispersed sample is passed through a beam of a monochromatic light source, e.g. a He-Ne gas laser with a wavelength of 63 µm. The light scattered by the particles at various angles is measured by a multi-element detector and numerical values relating to the scattering pattern are then recorded for subsequent analysis. These numerical values are then transformed using an appropriate optical model and mathematical procedure, applying the Fraunhofer theory to yield the proportion of total volume to a discrete number of size classes forming a volumetric particle size distribution. A more detailed description is given in ISO 13320 or in the European Pharmacopoeia (for instance Ph. Eur. 7.0/2.09.31.00).

Preferably the volumetric median particle size Dv50 is determined under consideration of CIPAC MT 187 and ISO 13320:2009 using the following procedure and equipment: A Carl Zeiss Axiolab drb KT (Carl Zeiss AG, Oberkochen, Germany) equipped with a Zeiss CP-Achromat 5x/0.12 object lens and a Zeiss E-PI 10x/20 ocular and a Mastersizer 2000 equipped with a helium-neon gas laser having a maximum output power of 4 mW, a beam wavelength of 633 nm, a beam diameter of 63 µm (1/e²) and a beam divergence of 1.5 mrad equipped with a Scirocco 2000 sample dispersion unit were used. Without additional preliminary treatment steps such as milling or the like, a sample of the respective particles, having a residual moisture content of not more than 5 wt.-%, based on the total weight of the particles, determined using a moisture analyzer Precisa XM60 (Precisa Gravimetrics AG, Dietikon, Switzerland) at a target weight loss of less than 10 mg per 5 grams of sample within 60 seconds at 105 °C, was analyzed at room temperature (23 °C) using the Mastersizer, where the measuring range was set to 0.02 to 2000 µm. The particles were introduced to the analyser beam using the dry powder feeder by direct spraying through the measurement area, wherein the material was loosened using an integrated vibrator. The particles were dispersed and fed to the optical system (feed 70 %, gap 7 mm) using pressurized dry air (1.5 bar_{g}). Herein the term "dry air" refers to air preferably having a water content of equal to or less than 10 g per kg of air. Before starting the actual measurement the laser was adjusted, the background was measured and the particle concentration (obscuration) was adjusted, using e.g. an optical concentration of 6.3 ± 0.7 %. Measurements of particle size were carried out in duplicate, wherein the result of each measurement is the average of three runs carried out automatically by the instrument's software. Measuring time was 8 seconds per run. The particle size is determined as an average of these two measurements using Fraunhofer diffraction for opaque particles as mathematical model.

The term "phagostimulant" in the context of the present invention refers to any natural or synthetic substance which stimulates and/or enhances feeding and/or ingestion of the composition by the target pest including phagostimulants, fragrances and pheromones.
Preferably, the at least one substance stimulating and/or enhancing feeding and/or ingestion of the composition is present in the bait composition in an amount ranging from 0.1 to 99 wt.-%, more preferably from 1 to 95 wt.-%, even more preferably from 10 to 90 wt.-%, still even more preferably from 15 to 80 wt.-%, and most preferably from 20 to 75 wt.-%, based on the total weight of the composition. If more than one substance stimulating and/or enhancing feeding and/or ingestion of the composition is present in the composition, these values refer to the combined amount of said substances.

Suitable substances stimulating and/or enhancing feeding and/or ingestion of the composition according to the present invention include carbohydrate-based phagostimulants, protein-based phagostimulants, oil-based phagostimulants, flavors, fragrances, pheromones and combinations thereof.

Carbohydrate-based phagostimulants include mono-, oligo- and polysaccharides, such as sugars and starches as well as products comprising said saccharides, like, for example, syrups, flours and brans, including, but not being limited to, potato starch, corn starch, rice flour/bran, corn flour/bran, bread crumbs, oatmeal, honey, fructose, arabinose, galactose, lactose, sucrose, amylose, maltose, xylose, glucose, glucosamine, glycerol, icing sugar, fruit juice, corn syrup, maple syrup, molasses, chocolate, and combinations thereof. Chocolate, icing sugar and combinations thereof may be preferred phagostimulants.

Protein-based phagostimulants include natural and synthetic amino acids, peptides, and proteins as well as products comprising them, like, for example, beef, poultry, fish, seafood, insects and parts thereof, egg albumin, soy bean flour, milk protein, fish meal, fish feed, yeast, yeast extract, silkworm pupae as well as hydrolysates, such as animal digest, extracts and/or combinations thereof, wherein fish feed may be preferred.

Oil-based phagostimulants include natural or synthetic fats and oils, preferably animal or vegetable fats and oils, as well as products comprising them, like, for example, fish oil, almond oil, hazelnut oil, walnut oil, peanut oil, nut oil, sunflower oil, rapeseed oil, corn oil, olive oil, cumin oil, soybean oil, sesame oil and combinations thereof, wherein fish oil may be preferred.

Fat and oils may not only act as a phagostimulant in the bait composition of the present invention, but also as solvent, formulation base, consistency provider etc, in particular if the bait composition is provided in form of a gel. The fat(s) and/or oil(s) used for these purposes may be the same or different from the one discussed above as oil-based phagostimulants. Thus, even if the bait composition does not comprise an oil-based phagostimulant, it may comprise at least one natural or synthetic fat or oil, which preferably is an animal or a vegetable fat or oil. Said oil preferably may be selected from the group consisting of fish oil, almond oil, hazelnut oil, walnut oil, peanut oil, nut oil, sunflower oil, rapeseed oil, corn oil, olive oil, cumin oil, soybean oil, sesame oil and mixtures thereof. If present, the (combined) amount of fat and/or oil in the composition (including all fats and/or oils being present in the composition, irrespective of their purpose) preferably ranges from 1 to 99 wt.-%, preferably from 5 to 98 wt.-%, more preferably from 10 to 95 wt.-%, still even more preferably from 20 to 90 wt.-% and most preferably from 25 to 80 wt.-%, based on the total weight of the composition. In bait compositions comprising such oils, the ratio of the combined amount of fats and/or oils to the combined amount of swellable agent preferably may range from 200:1 to 1:200, and in particular in gel formulations more preferably of from 100:1 to 1:10, even more preferably of from 75:1 to 1:5, still even more preferably of from 50:1 to 1:1 and most preferably of from 10:1 to 2:1.
The bait composition of the present invention may comprise more than one substance stimulating and/or enhancing feeding and/or ingestion of the composition. It may comprise e.g. a mixture and/or combination of two or more substances stimulating and/or enhancing feeding and/or ingestion of the composition from different chemical classes. Of course, it is also possible to use natural or synthetic products, which already comprise a mixture of carbohydrate-, protein- and/or oil-based phagostimulants, an example of which is chocolate. Preferred combinations of phagostimulants include, for instance, combinations of one or more carbohydrate-based phagostimulants with one or more oil-based phagostimulants, such as chocolate, sugar and plant oil, e.g. chocolate, icing sugar and almond oil, or combinations of sugars and plant oils, e.g. icing sugar and almond oil. In bait compositions comprising such combinations, the ratio of the combined amount of carbohydrate-based phagostimulants to the combined amount of oil-based phagostimulants preferably may range from 100:1 to 1:100, more preferably from 50:1 to 1:50 and most preferably from 10:1 to 1:10.

Alternatively or in addition, natural and/or synthetic flavors, fragrances and/or pheromones may be present in the bait composition to lure the target organism and/or to enhance ingestion of the composition by the target organism. Suitable flavors, fragrances and/or pheromones are well known to those skilled in the art. Feed stimulating flavors include, for instance, extracts of fish, meat and insects, without being limited to these. Fragrances useful in the bait compositions and methods of the present invention include fragrances derived from meat, fish, seafood, onion, milk, butter, cheese and fruit fragrances derived from e.g. apple, apricot, blackberry, banana, cherry, currant, gooseberry, grapefruit, raspberry, strawberry and combinations thereof, without being limited to these. Preferred flavors may include fish, meat and seafood.

Also suitable is commercially available animal food, such as dog food or fish feed, in particular dry animal feed. Such feed already contains a mixture of various types of substance stimulating and/or enhancing feeding and/or ingestion. For instance, a suitable commercially available dog food comprises 19 wt.-% protein, 7.5 wt.-% fat, 7.5 wt.-% ashes, 3 wt.-% fibre, 1.3 wt.-% calcium and 1 wt.-% phosphorus and a suitable commercially available fish feed comprises 46 wt.-% protein, 11 wt.-% fat, 3 wt.-% fibre and 6 wt.-% humidity.

As will be appreciated by those skilled in the art, pheromones useful in a particular bait composition will depend, among others, on the target species to be attracted to said bait composition. Pheromones for attracting a particular target species are well known to those skilled in the art. Pheromones useful for attracting cockroaches are discussed for example in WO 2012/010509 A2 and include the aggregation and sexual pheromones of the German cockroach, *Blatella germanica,* sexual pheromones of the American cockroach, *Periplaneta americana,* sexual pheromones of brown-banded cockroach *Supella longialpa* and mimics or combinations thereof.

Preferably, the ratio of the combined amount of substance(s) stimulating and/or enhancing feeding and/or ingestion of the composition to the combined amount of swellable agent(s) may range of from 200:1 to 1:200, more preferably of from 100:1 to 1:10, even more preferably of from 75:1 to 1:5, still even more preferably of from 50:1 to 1:1 and most preferably of from 10:1 to 2:1.

The bait composition of the present invention may comprise one or more additional components selected from the group comprising additional gel-forming agents, thickeners, solvents, natural and synthetic waxes and oils, surfactants, emulsifiers, dispersing agents, suspending agents, deflocculating agents, pheromones, fragrances, flavors, dyes, colorants, stabilizers, fillers, preservatives (including fungicides, bactericides, antioxidants and antiseptics palatable to the animal target organism without exerting a controlling effect on the target organism upon ingestion), bitter substances, which do not repel the target organism, but deter accidental uptake of the composition by non-target organisms, and mixtures thereof, without being limited to these.

In cases where an intimate mixture of the substance stimulating and/or enhancing feeding and/or ingestion of the composition and the swellable agent is desired, the present composition may preferably comprise thickeners, desiccants and/or stabilizers, in particular if the composition is in the form of a paste or a gel. Particularly preferred thickeners are hydrophobic and non-hydrophobic fumed silica, wherein hydrophobic fumed silica is most preferred. A suitable hydrophobic fumed silica according to the invention may be aftertreated with organosilanes like for example dimethyl dichlorosilane and may have a specific surface (BET, determined according to ISO 9277-2014-01) of 200 m²/g. A suitable commercially available hydrophobic fumed silica is for example Aerosil® R974 (Evonik Industries AG, Essen, Germany).

If present, the (combined) amount of thickeners in the bait composition of the present invention preferably may range of from 0.1 to 50 wt.-%, based on the total weight of the composition.

If present, the combined amount of the other above mentioned additional components (apart from thickeners) preferably may range of from 0.01 to 80 wt.-%, more preferably from 0.1 to 70 wt.%, even more preferably from 1 to 50 wt.-%, still even more preferably from 5 to 50 wt.-%, still even more preferably from 10 to 40 wt.-%, including 20 to 40 wt.-% and 30 to 40 wt.-%.

The target pest to be controlled in terms of the present invention preferably is an animal species which preferably is selected from invertebrates. Preferred pests are so-called hygiene pests and include snails and slugs as well as insects. Preferred species to be controlled are from the phyla Mollusca or Arthropoda, preferably from the subphyla Hexapoda, Conchifera or Isopoda, even more preferably from the class of Insecta or Gastropoda, among which the class of Insecta is preferred.

Snail and slug pests which can be controlled using the bait composition and/or methods of the present invention include those commonly causing problems in for example gardens, greenhouses or fields and include *Helix spp., Helicella spp., Cepaea spp., Deroceras spp., Limax spp., Arion spp.* and *Ariolimax spp.,* without being limited to these. It will be appreciated that the composition of the present invention is a bait composition for oral uptake. Thus, the bait composition as well as the method for controlling a pest according to the present invention rely on the physical effects exerted inside the organism's body after ingestion, and not a desiccating effect upon external contact with the swellable agent.

Still even more preferred pest species to be controlled by the bait compositions and methods of the present invention are Pterygota or terrestrial insects, particularly preferably from the order of Lepidoptera, Blattodea or Diptera, further particularly preferably from the suborder of Brachycera or from a family selected from the group consisting of Blaberidae, Blattellidae, Blattidae, Cryptocercidae, Polyphagidae, Nocticolidae and Tryonicidae. Still even more preferred species to be controlled by the present invention are cockroaches, including e.g. *Blatta orientales, Blatella germanica, Blatella asaina, Leucophaea maderae, Panchlora spp., Parcoblatta spp., Periplaneta australasiae, Periplaneta americana, Periplaneta brunnea, Periplaneta fuliginaso, Periplaneta japonica,* and *Supella longialpa,* wherein *Periplaneta americana, Blatella germanica* and *Blatta orientales* are most preferred.

The bait composition of the present invention may be preferably in solid form or in the form of a paste or a gel, wherein a solid form may be particularly preferred. In terms of the present invention such solid forms include bars, blocks, tablets and especially particulate solid forms of any known shape, including grains, pellets, shells, fragments, beads, granules, capsules, powders and the like as well as mixtures thereof, without being limited to these. Preferably, the individual particles of such a solid particulate have a median particle size Dv50 of 30 mm or less, more preferably of 20 mm or less and even more preferably being in the range of from 8 µm to 10 mm.

If the composition is in the form of a gel, for application said gel may preferably be provided in an applicator adapted to provide spots or lines of said gel in a place where the pest will consume said composition. Suitable applicators are known in the art. Preferably the applicator may be selected from syringes and pistons, without being limited to these.

In terms of the present invention the term "paste" refers to a suspension of particulate material in a fluid having a solids content of at least 25 wt.-%, based on the whole composition, which is not pourable at 25 °C and a pressure of 1 bar.

In terms of the present invention the term "gel" refers to a form-retaining, yet easily deformable dispersed system comprising at least two components, namely a colloidally dispersed solid comprising elongated and/or heavily branched particles which spans and ensnares a volume of a fluid as dispersing agent. The solid suspension is coherent, i.e. it forms a three-dimensional network in the dispersing agent.

By the term "place where the pest will consume the composition" in the context of the present invention, a place where the pest resides and forages for food is meant, including places where the pest resides temporarily as well as places where the pest resides permanently.

The present invention further relates to the use of a swellable agent in the form of particles having a median particle size Dv50 of 100 µm or less for controlling a pest ingesting a composition which comprises said swellable agent by physical effects. Herein the swellable agent preferably is one or more of the swellable agents described above. The composition preferably is a bait composition according to the present invention as described above. Further, the pest to be controlled preferably is a pest as described above.

The present invention also provides a method for controlling a pest by physical effects comprising the steps of:
1) providing a bait composition which comprises at least one swellable agent in the form of particles having a median particle size Dv50 of 100 µm or less and at least one substance stimulating and/or enhancing feeding and/or ingestion of the composition,
2) applying at least a portion of the composition in a place where the pest will consume the composition,
3) letting the pest consume the composition.

The method of the present invention preferably employs the swellable agent(s) and substance(s) stimulating and/or enhancing feeding and/or ingestion of the composition already described above. In addition, the bait composition employed in said method preferably is a bait composition according to the present invention as already described above. The pest to be controlled preferably is a pest as described above. Preferred ways of applying such a composition have also been described above. Herein the bait composition may be in the form of a gel which is applied in the form of one or more spots or lines in a place where the pest will consume the composition. The gel preferably may be applied by an applicator adapted to provide said spots or lines of the gel, which applicator preferably may be selected from the group consisting of syringes and pistons, as already described above. Preferred are also solid forms of the bait composition of the present invention. Further, it may be preferred to offer a separate source of water to the target pest in order to enhance swelling of the ingested bait composition of the present invention inside the body of the target organism.

The present invention further relates to a method for producing the bait compositions of the present invention comprising the steps of:
a) providing at least one swellable agent in the form of particles having a median particle size Dv50 of 100 µm or less and at least one substance stimulating and/or enhancing feeding and/or ingestion of the composition, and
b) mixing the at least one swellable agent and the at least one substance stimulating and/or enhancing feeding and/or ingestion of the composition.

The method preferably employs the swellable agent(s) and substance(s) stimulating and/or enhancing feeding and/or ingestion already described above.

Mixing can be performed using any known mixing methods and devices. In many cases it may be advantageous to employ an intimate mixture of the substance(s) stimulating and/or enhancing feeding and/or ingestion of the composition and the swellable agent(s) in the bait composition of the present invention, i.e. a mixture wherein the substance(s) stimulating and/or enhancing feeding and/or ingestion of the composition and the swellable agent(s) are in contact with each other and are homogeneously distributed on a macroscopic level throughout the mixture. In particular in the case of solid application forms in order to obtain such an intimate mixture it may be preferred to let the swellable agent(s) swell in the presence of the substance(s) stimulating and/or enhancing feeding and/or ingestion of the composition and optionally further ingredients of the composition by the absorption of water to allow a penetration of the substance(s) stimulating and/or enhancing feeding and/or ingestion of the composition into the swollen network of the swellable agent, before drying again and optionally comminuting and/or shaping said mixture.

Thus, the method may further comprise the optional steps of:
c) swelling the swellable agent(s) by the absorption of water, before
d) drying the mixture again, before, while or after comminuting and/or shaping the mixture.

Methods for drying such mixtures are well known to those skilled in the art and may be selected according to the desired residual moisture content in the composition, the ingredients being present in the composition etc.

### List of Figures

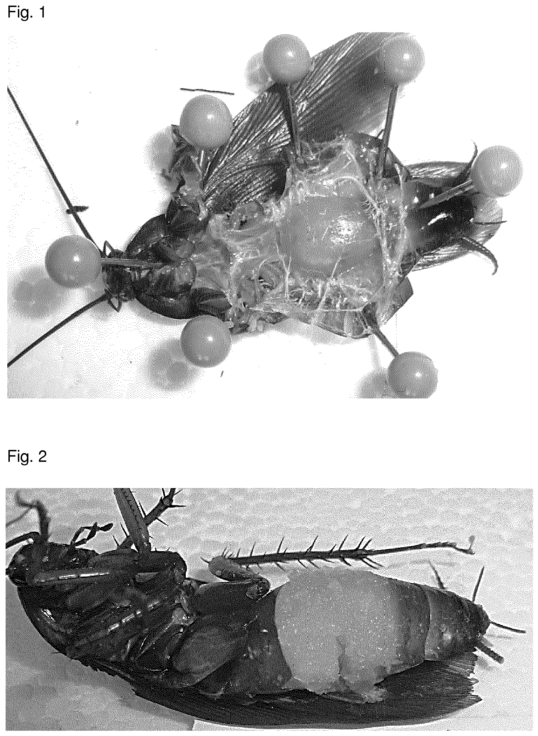

Figures 1 and 2 show dissected individual of *Periplaneta americana* 5 days after force-feeding. The swellable agent is present gastro-intestinal tract (Fig. 1) and also led to rupture of the exoskeleton (Fig. 2).

### Examples

### Example 1: Force-Feeding of an Oil-based Gel Composition

To demonstrate that a bait composition which comprises a swellable agent and a substance stimulating and/or enhancing feeding and/or ingestion, but is substantially free of any pesticidal agent exerting a controlling effect on the pest by chemical or biological action, indeed can exert a controlling effect on pests by physical means, cockroaches of the species *Periplaneta americana* were force-fed using an oil-based gel formulation prepared from the following ingredients:

| Ingredient | Amount [g] |
|---|---|
| Aerosil^{®} R974¹ | 80 |
| almond oil | 643 |
| icing sugar | 80 |
| T 5066 F² | 20 |

| | |
|---|---|
| ¹ hydrophilic silica commercially available from Evonik Industries AG, Essen, Germany ² cross-linked poly(sodium acrylate) commercially available from Evonik Industries AG, Essen, Germany | |

Aerosil^{®} R974, almond oil and icing sugar were mixed with stirring until a homogenized mixture was obtained. T 5066 F was added to said mixture with stirring. A sample group of 20 adult cockroaches of the species *Periplaneta americana* were force-fed once with 0.1 mL of the resultant mixture each using a commercially available syringe (BD Venflon^{™} Pro Safety catheter 0.9 x 25 mm, BD, Franklin Lakes, NJ, USA) whose flexible cannula had been reduced to a length of 0.3 cm. In the control group animals were force-fed with 0.1 mL of almond oil. For force-feeding the flexible cannula was carefully inserted into the oral opening of the cockroaches and the above formulation was introduced by emptying the syringe. 55% of the individuals were dead within 7 days [d]. No mortality was registered in the control group within the observed time period.

The dead individuals were dissected and analyzed for the presence of swellable agent in their gastrointestinal tract (see Fig. 1). Swelling of the swellable agent led to severe structural damages of the gastrointestinal tract and even bursting of the exoskeleton (Fig. 2).

These results show that the bait composition of the present invention which comprises a swellable agent and a substance stimulating and/or enhancing feeding and/or ingestion, but is free of any pesticidal agent exerting a controlling effect on the pest by chemical or biological action, indeed can exert a controlling effect on pests by physical means. The swellable agent as such leads to a rupture of the animal's gastro-intestinal tract and exoskeleton, leading to death of the pest. This effect is based on the volume increase of the swellable agent and therefore represents a mechanical, i.e. mere physical effect. Said effect is independent of a pesticidal agent exerting a controlling effect on the pest by chemical or biological action, as the composition is substantially free of any such pesticidal agent.

### Example 2: Voluntary Uptake of an Oil-based Gel Composition

Another gel formulation was prepared from the following ingredients:

| Ingredient | Amount [g] |
|---|---|
| T 5066 F | 10 |
| chocolate | 16 |
| almond oil | 16 |
| icing sugar | 8 |

Ground T 5066 F (mean particle size Dv50 of approximately 8 µm) and icing sugar were added with stirring to a mixture of molten chocolate in almond oil. Individual doses of 0.1 mL of the resulting mixture were offered to adult cockroaches of the species *Periplaneta americana.* A voluntary uptake of the composition by the cockroaches was observed which lead to the death of approximately half of the sample group within 12 d, while in the control group all individuals survived. Dissecting of the dead individuals again proved ingestion of the swellable agent and rupture of the gastro-intestinal tract and the exoskeleton.

### Example 3: Voluntary Uptake of Solid Particulate Compositions

Composition A: 56 g of commercially available fish feed (TetraMin, Hauptfutter fur alle Zierfische, Tetra GmbH, Melle, Germany) was ground and then mixed with 14 g of the swellable agent T 5066 F. 1.20 L of water was added and the resulting mixture was allowed to swell with stirring. The mixture was dried over night in a drying oven at 110 °C. The resulting dry matter was pestled to obtain particles which were readily consumable and palatable for cockroaches. Voluntary ingestion lead to a 100% mortality in the sample group of the tested cockroach species (*Blatella germanica*) within 14 d.

Composition B: 6.0 g of commercially available dog food (fit + fun Hund Trockenfutter Mix, MultiFit Tiernahrungs GmbH, Krefeld, Germany) was ground and then mixed with 14 g of the swellable agent T 5066 F. 2.1 L of water was added and the resulting mixture was allowed to swell with stirring. The mixture was dried over 48 hours in a drying oven at 105°C. The resulting dry matter was collected and was readily consumable and palatable for cockroaches. Voluntary ingestion lead to 27% mortality in the sample group of the tested cockroach species (*Blatella germanica*) within 14 d and 56% mortality within 21 d whereas in the control group of the same species which was kept without any food no mortality was observed within 14 d.

## Claims

1. Bait composition for controlling a pest by physical effects, comprising
i) at least one swellable agent wherein swellable agent is defined as a substance capable of swelling upon contact with water and is capable of absorbing at least five times its own dry weight of deionized water having a median particle size Dv50 of 100 µm or less and
ii) at least one phagostimulant wherein phagostimulant is defined as a substance stimulating and/or enhancing feeding and/or ingestion of the composition including fragrances and pheromones,
wherein the composition comprises less than 0.1 wt.-% of any pesticidal agent exerting a controlling effect on the pest by chemical or biological action after ingestion of the composition by the pest.

2. The bait composition according to claim 1, wherein the at least one swellable agent is a hydrophilic swellable agent, preferably a polymeric hydrophilic swellable agent, more preferably a polymeric hydrophilic swellable agent comprising at least one cross-linked acrylic polymer and most preferably a polymeric hydrophilic swellable agent comprising at least one cross-linked poly(acrylic acid) and/or a salt thereof.

3. The bait composition according to claims 1 or 2, wherein the at least one swellable agent is present in the composition in the form of particles, said particles preferably having a median particle size Dv50 of from 0.1 to 90 µm, more preferably of from 1 to 80 µm, even more preferably of from 5 to 70 µm and most preferably of from 8 to 63 µm.

4. The bait composition according to any of the preceeding claims, wherein the at least one substance stimulating and/or enhancing feeding and/or ingestion of the composition is selected from the group consisting of carbohydrate-based phagostimulants, protein-based phagostimulants, oil-based phagostimulants, flavors, fragrances, pheromones and combinations thereof.

5. The bait composition according to any of the preceeding claims, wherein the amount of the at least one swellable agent in the composition ranges from 1 to 90 wt.-%, preferably from 5 to 75 wt.-%, more preferably from 7.5 to 50 wt.-%, still even more preferably from 10 to 40 wt.-% and most preferably from 15 to 25 wt.-%, based on the total weight of the composition.

6. The bait composition according to any of the preceeding claims, wherein the amount of the substance stimulating and/or enhancing feeding and/or ingestion of the composition in the composition ranges from 0.1 to 99 wt.-%, preferably from 1 to 95 wt.-%, more preferably from 10 to 90 wt.-%, still even more preferably from 15 to 80 wt.-% and most preferably from 20 to 75 wt.-%, based on the total weight of the composition.

7. The bait composition according to any of the preceeding claims, further comprising at least one natural or synthetic fat or oil, preferably an animal or a vegetable fat or oil, said oil more preferably being selected from the group consisting of fish oil, almond oil, hazelnut oil, walnut oil, peanut oil, nut oil, sunflower oil, rapeseed oil, corn oil, olive oil, cumin oil, soybean oil, sesame oil and mixtures thereof, wherein the amount of the at least one fat or oil in the composition ranges from 1 to 99 wt.-%, preferably from 5 to 98 wt.-%, more preferably from 10 to 95 wt.-%, still even more preferably from 20 to 90 wt.-% and most preferably from 25 to 80 wt.-%, based on the total weight of the composition.

8. The bait composition according to any of the preceeding claims, further comprising one or more components selected from the group consisting of additional gel-forming agents, thickeners, solvents, natural and synthetic waxes and oils, surfactants, emulsifiers, dispersing agents, suspending agents, deflocculating agents, pheromones, fragrances, flavors, dyes, colorants, stabilizers, fillers, preservatives, bitter substances and mixtures thereof, preferably comprising hydrophobic and/or non-hydrophobic fumed silica.

9. The bait composition according to any of the preceeding claims, wherein the composition is in solid form or in the form of a paste or a gel, preferably in solid form.

10. Use of a swellable agent wherein swellable agent is defined as a substance capable of swelling upon contact with water and capable of absorbing at least five times its own dry weight of deionized water in the form of particles having a median particle size Dv50 of 100 µm or less for controlling a pest ingesting a composition which comprises said swellable agent by physical effects.

11. Use according to claim 10, wherein the swellable agent is a swellable agent as defined in any of claims 2 to 3 and wherein the composition comprising said swellable agent preferably is a bait composition according to any of claims 1 to 9.

12. Method for controlling a pest by physical effects comprising the steps of:
1) providing a bait composition which comprises at least one swellable agent wherein swellable agent is defined as a substance capable of swelling upon contact with water and is capable of absorbing at least five times its own dry weight of deionized water in the form of particles having a median particle size Dv50 of 100 µm or less and at least one substance stimulating and/or enhancing feeding and/or ingestion of the composition ,
2) applying a portion of the composition in a place where the pest will consume the composition,
3) letting the pest consume the composition.

13. The method according to claim 12, wherein the bait composition is a composition according to any of claims 1 to 9.

14. The composition according to any of claims 1 to 9, the use according to claims 10 or 11 or the method according to claims 12 or 13, wherein the pest is from the phyla Mollusca or Arthropoda, preferably from the subphyla Hexapoda, Conchifera or Isopoda, even more preferably from the class of Insecta or Gastropoda, still even more preferably from Pterygota or terrestrial insects, particularly preferably from the order of Lepidoptera, Blattodea or Diptera, further particularly preferably from the suborder of Brachycera or from a family selected from the group consisting of Blaberidae, Blattellidae, Blattidae, Cryptocercidae, Polyphagidae, Nocticolidae and Tryonicidae and most preferably is selected from the group consisting of *Blattella germanica* (German cockroach), *Blatta orientalis* (Oriental cockroach), *Blattella asahina* (Asian cockroach), *Leucophaea maderae, Panchlora spp., Parcoblatta spp., Periplaneta americana* (American cockroach), *Periplaneta australasiae* (Australian cockroach), *Periplaneta brunnea* (brown cockroach), *Periplaneta japonica* (Japanese cockroach), *Periplaneta fuliginosa* (smokybrown cockroach) and *Supella longipalpa* (brown-banded cockroach).

15. Method of producing the bait composition according to any of claims 1 to 9 or 14 comprising the steps of
a) providing at least one swellable agent wherein swellable agent is defined as a substance capable of swelling upon contact with water and is capable of absorbing at least five times its own dry weight of deionized water in the form of particles having a median particle size Dv50 of 100 µm or less and at least one substance stimulating and/or enhancing feeding and/or ingestion of the composition, and
b) mixing the at least one swellable agent and the at least phagostimulant wherein phagostimulant is defined as a substance stimulating and/or enhancing feeding and/or ingestion of the composition including fragrances and pheromones.

## Patentansprüche

1. Köderzusammensetzung zur Bekämpfung eines Schädlings durch physikalische Wirkungen umfassend
i) mindestens ein quellbares Mittel, wobei quellbares Mittel als eine Substanz definiert ist, die bei Kontakt mit Wasser in der Lage ist aufzuquellen und mindestens das Fünffache ihres eigenen Trockengewichts an entmineralisiertem Wasser aufnehmen kann, das eine mittlere Teilchengröße Dv50 von 100 µm oder weniger aufweist und
ii) mindestens ein Phagostimulans, wobei Phagostimulans als eine Substanz definiert ist, welche die Zufuhr und/oder Aufnahme der Zusammensetzung stimuliert und/oder verbessert, inklusive Duftstoffen und Pheromonen,
wobei die Zusammensetzung weniger als 0,1 Gew.-% jeglichen pestiziden Wirkstoffs, der einen bekämpfenden Effekt auf den Schädling durch chemische oder biologische Wirkung nach Aufnahme der Zusammensetzung durch den Schädling ausübt, umfasst.

2. Die Köderzusammensetzung gemäß Anspruch 1, wobei das mindestens eine quellbare Mittel ein hydrophiles quellbares Mittel ist, vorzugsweise ein polymeres hydrophiles quellbares Mittel, bevorzugter ein polymeres hydrophiles quellbares Mittel, welches mindestens ein quervernetztes Acrylpolymer umfasst, und besonders bevorzugt ein polymeres hydrophiles quellbares Mittel, das mindestens eine quervernetzte Polyacrylsäure und/oder ein Salz derselben umfasst.

3. Die Köderzusammensetzung gemäß Anspruch 1 oder 2, wobei das mindestens eine quellbare Mittel in der Zusammensetzung in Form von Teilchen vorhanden ist, wobei diese Teilchen vorzugsweise einen mittleren Teilchendurchmesser Dv50 von 0,1 bis 90 µm, bevorzugter von 1 bis 80 µm, noch bevorzugter von 5 bis 70 µm und besonders bevorzugt von 8 bis 63 µm aufweisen.

4. Die Köderzusammensetzung gemäß einem der vorhergehenden Ansprüche, wobei die mindestens eine Substanz, welche die Zufuhr und/oder Aufnahme der Zusammensetzung stimuliert und/oder verbessert, aus der Gruppe bestehend aus kohlenhydratbasierten Phagostimulanzien, proteinbasierten Phagostimulanzien, ölbasierten Phagostimulanzien, Aromen, Duftstoffen, Pheromonen und Kombinationen derselben ausgewählt ist.

5. Die Köderzusammensetzung gemäß einem der vorhergehenden Ansprüche, wobei die Menge des mindestens einen quellbaren Mittels in der Zusammensetzung von 1 bis 90 Gew.-%, vorzugsweise von 5 bis 75 Gew.-%, bevorzugter von 7,5 bis 50 Gew.-%, noch bevorzugter von 10 bis 40 Gew.-% und besonders bevorzugt von 15 bis 25 Gew.-%, bezogen auf das Gesamtgewicht der Zusammensetzung, reicht.

6. Die Köderzusammensetzung gemäß einem der vorhergehenden Ansprüche, wobei die Menge der Substanz, welche die Zufuhr und/oder Aufnahme der Zusammensetzung stimuliert und/oder verbessert, in der Zusammensetzung von 0,1 bis 99 Gew.-%, vorzugsweise von 1 bis 95 Gew.-%, noch bevorzugter von 10 bis 90 Gew.-%, noch bevorzugter von 15 bis 80 Gew.-% und besonders bevorzugt von 20 bis 75 Gew.-%, bezogen auf das Gesamtgewicht der Zusammensetzung, reicht.

7. Die Köderzusammensetzung gemäß einem der vorhergehenden Ansprüche weiterhin umfassend mindestens ein natürliches oder synthetisches Fett oder Öl, vorzugsweise ein tierisches oder ein pflanzliches Fett oder Öl, wobei dieses Öl weiterhin bevorzugt aus der Gruppe bestehend aus Fischöl, Mandelöl, Haselnussöl, Walnussöl, Erdnussöl, Nussöl, Sonnenblumenöl, Rapsöl, Maisöl, Olivenöl, Schwarzkümmelöl, Sojaöl, Sesamöl und Mischungen derselben ausgewählt ist, wobei die Menge des mindestens einen Fetts oder Öls in der Zusammensetzung von 1 bis 99 Gew.-%, vorzugsweise von 5 bis 98 Gew.-%, bevorzugter von 10 bis 95 Gew.-%, noch bevorzugter von 20 bis 90 Gew.-% und besonders bevorzugt von 25 bis 80 Gew.-%, bezogen auf das Gesamtgewicht der Zusammensetzung, reicht.

8. Die Köderzusammensetzung gemäß einem der vorhergehenden Ansprüche weiterhin umfassend einen oder mehrere Bestandteile ausgewählt aus der Gruppe bestehend aus zusätzlichen gelbildenden Mitteln, Verdickern, Lösungsmitteln, natürlichen und synthetischen Wachsen und Ölen, oberflächenaktiven Mitteln, Emulgatoren, Dispergiermitteln, Suspendiermitteln, Entflockungsmitteln, Pheromonen, Duftstoffen, Aromen, Farbstoffen, Färbemitteln, Stabilisatoren, Füllstoffen, Konservierungsmitteln, Bittermitteln und Mischungen derselben, vorzugsweise umfassend hydrophobe und/oder nichthydrophobe pyrogene Kieselsäure.

9. Die Köderzusammensetzung gemäß einem der vorhergehenden Ansprüche, wobei die Zusammensetzung in fester Form oder in der Form einer Paste oder eines Gels vorliegt, vorzugsweise in fester Form.

10. Verwendung eines quellbaren Mittels, wobei quellbares Mittel als eine Substanz definiert ist, die bei Kontakt mit Wasser in der Lage ist aufzuquellen und mindestens das Fünffache ihres eigenen Trockengewichts an entmineralisiertem Wasser aufnehmen kann, in der Form von Teilchen, die eine mittlere Teilchengröße Dv50 von 100 µm oder weniger aufweisen, zur Bekämpfung eines Schädlings, der eine Zusammensetzung, welche dieses quellbare Mittel enthält, aufnimmt, durch physikalische Wirkungen.

11. Verwendung gemäß Anspruch 10, wobei das quellbare Mittel ein quellbares Mittel wie in einem der Ansprüche 2 bis 3 definiert ist und wobei die Zusammensetzung, welche dieses quellbare Mittel enthält, vorzugsweise eine Köderzusammensetzung gemäß einem der Ansprüche 1 bis 9 ist.

12. Verfahren zur Bekämpfung eines Schädlings durch physikalische Wirkungen, umfassend die Schritte
1) Bereitstellen einer Köderzusammensetzung, die mindestens ein quellbares Mittel, wobei quellbares Mittel als eine Substanz definiert ist, die bei Kontakt mit Wasser in der Lage ist aufzuquellen und mindestens das Fünffache ihres eigenen Trockengewichts an entmineralisiertem Wasser aufnehmen kann, in der Form von Teilchen, die eine mittlere Teilchengröße Dv50 von 100 µm oder weniger aufweisen, und mindestens eine Substanz, welche die Zufuhr und/oder Aufnahme der Zusammensetzung stimuliert und/oder verbessert, enthält,
2) Ausbringen einer Menge der Zusammensetzung an einem Ort, an welchem der Schädling die Zusammensetzung verzehren wird,
3) den Schädling die Zusammensetzung konsumieren lassen.

13. Das Verfahren gemäß Anspruch 12, wobei die Köderzusammensetzung eine Zusammensetzung gemäß einem der Ansprüche 1 bis 9 ist.

14. Die Zusammensetzung gemäß einem der Ansprüche 1 bis 9, die Verwendung gemäß den Ansprüchen 10 oder 11 oder das Verfahren gemäß den Ansprüchen 12 oder 13, wobei der Schädling aus dem Stamm Mollusca oder Arthropoda ist, vorzugsweise aus dem Unterstamm Hexapoda, Conchifera oder Isopoda, bevorzugter aus der Klasse der Insecta oder Gastropoda, noch bevorzugter aus Pterygota oder terrestrischen Insekten, insbesondere bevorzugt aus der Ordnung der Lepidoptera, Blattodea oder Diptera, weiterhin besonders bevorzugt aus der Unterordnung der Brachycera oder aus einer Familie, ausgewählt aus der Gruppe bestehend aus Blaberidae, Blattellidae, Blattidae, Cryptocercidae, Polyphagidae, Nocticolidae und Tryonicidae und am bevorzugtesten aus der Gruppe bestehend aus *Blattella germanica* (Deutsche Schabe), *Blatta orientalis* (Gemeine Küchenschabe), *Blattella asahina* (Asiatische Schabe), *Leucophaea maderae, Panchlora spp., Parcoblatta spp., Periplaneta americana* (Amerikanische Großschabe), *Periplaneta australasiae (*Australische Schabe*)*, *Periplaneta brunnea* (Braune Schabe), *Periplaneta japonica* (Japanische Schabe), *Periplaneta fuliginosa (*Rauchbraune Großschabe*)* und *Supella longipalpa* (Braunbandschabe) ausgewählt ist.

15. Verfahren zur Herstellung der Köderzusammensetzung gemäß einem der Ansprüche 1 bis 9 oder 14, umfassend die Schritte
a) Bereitstellen mindestens eines quellbaren Mittels, wobei quellbares Mittel als eine Substanz definiert ist, die bei Kontakt mit Wasser in der Lage ist aufzuquellen und mindestens das Fünffache ihres eigenen Trockengewichts an entmineralisiertem Wasser aufnehmen kann, in der Form von Teilchen, die eine mittlere Teilchengröße Dv50 von 100 µm oder weniger aufweisen, und mindestens einer Substanz, welche die Zufuhr und/oder Aufnahme der Zusammensetzung stimuliert und/oder verbessert, und
b) Mischen des mindestens einen quellbaren Mittels und des mindestens einen Phagostimulans, wobei Phagostimulans als eine Substanz definiert ist, welche die Zufuhr und/oder Aufnahme der Zusammensetzung stimuliert und/oder verbessert, inklusive Duftstoffen und Pheromonen.

## Revendications

1. Composition d'appât pour lutter contre un nuisible par effets physiques, comprenant :
i) au moins un agent gonflable, capable d'absorber au moins cinq fois son propre poids à sec d'eau désionisée et présentant une taille médiane de particule, Dv50, de 100 µm ou moins,
ii) et au moins une substance stimulant et/ou favorisant la consommation de la composition comme nourriture et/ou son ingestion,
laquelle composition comprend moins de 0,1 % en poids de n'importe quel agent pesticide exerçant sur le nuisible un effet de lutte par action chimique ou biologique, une fois la composition ingérée par le nuisible.

2. Composition d'appât conforme à la revendication 1, dans laquelle l'agent gonflable au nombre d'au moins un est un agent gonflable hydrophile, de préférence un agent gonflable hydrophile polymère, mieux encore un agent gonflable hydrophile polymère comprenant au moins un polymère polyacrylique réticulé, et surtout un agent gonflable hydrophile polymère comprenant au moins un poly(acide acrylique) réticulé et/ou un sel d'un tel polymère.

3. Composition d'appât conforme à la revendication 1 ou 2, dans laquelle composition ledit agent gonflable au nombre d'au moins un se trouve présent sous forme de particules, lesquelles particules présentent de préférence une taille médiane de particules, Dv50, de 0,1 à 90 µm, mieux encore de 1 à 80 µm, toujours mieux de 5 à 70 µm, et surtout de 8 à 63 µm.

4. Composition d'appât conforme à l'une des revendications précédentes, dans laquelle ladite substance, au nombre d'au moins une, stimulant et/ou favorisant la consommation de la composition comme nourriture et/ou son ingestion est choisie dans l'ensemble constitué par les phago-stimulants à base de glucides, phago-stimulants à base de protéines, phago-stimulants à base d'huiles, arômes, parfums et phéromones, ainsi que leurs combinaisons.

5. Composition d'appât conforme à l'une des revendications précédentes, dans laquelle la proportion dudit agent gonflable, au nombre d'au moins un, dans la composition vaut de 1 à 90 % en poids, de préférence de 5 à 75 % en poids, mieux encore de 7,5 à 50 % en poids, toujours mieux de 10 à 40 % en poids, et surtout de 15 à 25 % en poids, par rapport au poids total de la composition.

6. Composition d'appât conforme à l'une des revendications précédentes, dans laquelle la proportion, dans la composition, de ladite substance, au nombre d'au moins une, stimulant et/ou favorisant la consommation de la composition comme nourriture et/ou son ingestion vaut de 0,1 à 99 % en poids, de préférence de 1 à 95 % en poids, mieux encore de 10 à 90 % en poids, toujours mieux de 15 à 80 % en poids, et surtout de 20 à 75 % en poids, par rapport au poids total de la composition.

7. Composition d'appât conforme à l'une des revendications précédentes, qui comprend en outre au moins une huile ou graisse, naturelle ou synthétique, de préférence une huile ou graisse animale ou végétale, laquelle huile est, mieux encore, choisie parmi les suivantes : huile de poisson, huile d'amande, huile de noisette, huile de noix, huile d'arachide, huile de fruit à coque, huile de tournesol, huile de colza, huile de maïs, huile d'olive, huile de cumin, huile de soja et huile de sésame, ainsi que leurs mélanges, et dans laquelle la proportion de l'huile ou graisse, au nombre d'au moins une, dans la composition vaut de 1 à 99 % en poids, de préférence de 5 à 98 % en poids, mieux encore de 10 à 95 % en poids, toujours mieux de 20 à 90 % en poids, et surtout de 25 à 80 % en poids, par rapport au poids total de la composition.

8. Composition d'appât conforme à l'une des revendications précédentes, qui comprend en outre un ou plusieurs composant(s) choisi(s) dans l'ensemble constitué par les suivants : agents gélifiants supplémentaires, épaississants, solvants, huiles et cires naturelles ou synthétiques, tensioactifs, émulsifiants, dispersants, agents de mise en suspension, agents de défloculation, phéromones, parfums, arômes, colorants, agents de coloration, stabilisants, charges, conservateurs et substances amères, ainsi que leurs mélanges, et comprenant de préférence de la silice de pyrohydrolyse, hydrophobe ou non-hydrophobe, ou de ces deux types.

9. Composition d'appât conforme à l'une des revendications précédentes, laquelle composition se présente sous forme solide ou sous forme de pâte ou de gel, mais de préférence sous forme solide.

10. Utilisation d'un agent gonflable capable d'absorber au moins cinq fois son propre poids à sec d'eau désionisée, sous forme de particules présentant une taille médiane de particule, Dv50, de 100 µm ou moins, pour lutter, par effets physiques, contre un nuisible auquel on fera ingérer une composition comprenant ledit agent gonflable.

11. Utilisation conforme à la revendication 10, pour laquelle l'agent gonflable est un agent gonflable tel que défini dans l'une des revendications 2 et 3, et pour laquelle la composition comprenant ledit agent gonflable est de préférence une composition d'appât conforme à l'une des revendications 1 à 9.

12. Procédé de lutte contre un nuisible par effets physiques, comportant les étapes suivantes :
1) prendre une composition d'appât comprenant au moins un agent gonflable capable d'absorber au moins cinq fois son propre poids à sec d'eau désionisée, sous forme de particules présentant une taille médiane, Dv50, de 100 µm ou moins, et au moins une substance stimulant et/ou favorisant la consommation de la composition comme nourriture et/ou son ingestion,
2) appliquer une partie de la composition en un lieu où le nuisible pourra consommer la composition,
3) et laisser le nuisible consommer la composition.

13. Procédé conforme à la revendication 12, dans lequel la composition d'appât est une composition conforme à l'une des revendications 1 à 9.

14. Composition conforme à l'une des revendications 1 à 9, utilisation conforme à la revendication 10 ou 11, ou procédé conforme à la revendication 12 ou 13, pour laquelle ou lequel le nuisible fait partie de l'embranchement des mollusques ou de celui des arthropodes, de préférence du sous-embranchement des hexapodes, des conchifères ou des isopodes, mieux encore de la classe des insectes ou de celle des gastéropodes, toujours mieux des ptérygotes ou des insectes terrestres, en particulier de l'ordre des lépidoptères, des blattodés ou des diptères, plus particulièrement du sous-ordre des brachycères ou d'une famille choisie dans l'ensemble formé par les suivantes : blabéridés, blatellidés, blattidés, cryptocercidés, polyphagidés, nocticolidés et tryonicidés, et surtout, est choisi dans l'ensemble formé par les espèces suivantes : *Blatella germanica* (blatte germanique), *Blatta orientais* (blatte orientale), *Blattella asahinai* (blatte asiatique), *Leucophaea maderae, Panchlora* spp., *Parcoblatta* spp., *Periplaneta americana* (blatte américaine), *Periplaneta australasiae* (blatte australienne), *Periplaneta brunnea* (blatte brune), *Periplaneta japonica* (blatte aponaise), *Periplaneta fuliginosa* (blatte fuligineuse) et *Supella longipalpa* (blatte rayée).

15. Procédé de production d'une composition d'appât conforme à l'une des revendications 1 à 9 ou à la revendication 14, comportant les étapes suivantes :
a) prendre au moins un agent gonflable capable d'absorber au moins cinq fois son propre poids à sec d'eau désionisée, sous forme de particules présentant une taille médiane, Dv50, de 100 µm ou moins, et au moins une substance stimulant et/ou favorisant la consommation de la composition comme nourriture et/ou son ingestion,
b) et mélanger l'agent gonflable au nombre d'au moins un et la substance, au nombre d'au moins une, stimulant et/ou favorisant la consommation de la composition comme nourriture et/ou son ingestion.
